# EUROPEAN PATENT SPECIFICATION

(11) **EP 1 013 722 B1**
(45) Date of publication and mention of the grant of the patent: **17.09.2003**
(21) Application number: 99125926.8
(22) Date of filing: 23.12.1999
(51) Int. Cl.: C09C 1/00, C09D 11/02

(54) **Pigment mixture**
Pigment-Mischung
Mélange de pigments

(30) Priority: 23.12.1998 EP 98124475
(43) Date of publication of application: 28.06.2000
(73) Proprietor: MERCK PATENT GmbH, 64293 Darmstadt (DE)
(72) Inventor: Pfaff, Gerhard, Dr., 64839 Münster (DE); Schoen, Sabine, Dr., 64287 Darmstadt (DE); Shimizu, Kaiman, Iwaki-shi, Fukushima-pref, 974-8251 (JP)

(56) References cited:
- DE-A- 4 441 223

## Description

The present invention relates to pigment mixtures containing at least two components, component A being Al₂O₃ flakes coated with one or more metals, metal oxides and/or metal sulfides and component B being one or more functional pigments such as electrically conductive pigments, magnetic pigments, IR-reflecting pigments or lasermarkable pigments and to their use in varnishes, paints, printing inks, plastics and powder coatings.

For various areas of application use is made nowadays of electrically conductive pigments with which it is possible, for example, to produce antistatic coatings for electronic equipment, antistatic floor coverings, antistatic finishes for explosion-protected areas, or electrically conductive primers for the painting of plastics. Magnetic pigments can be used e.g. for magnetic coatings and IR-reflective pigments are applied e.g. for agricultural films. Other functional pigments are of interest as well. Functional pigments are all pigments where not the colour but other physical properties have the highest priority. Examples are electrically conductive, magnetic, IR-reflective, or lasermarkable pigments.

To produce dark conductive pigments use is currently made of carbon black, graphite and nickel-coated graphite, and, to produce light-coloured pigments, of metal platelets and mixed oxides, such as antimony-doped tin oxide, for example. These mixed oxides can be in the form in which they have been deposited on carriers, examples being mica, SiO₂, glass or barium sulfate.

However, owing to their high light absorption in the visible spectral range, carbon black and graphite cannot be used for transparent, pale or coloured coatings. A further problem is the strong absorption in the IR range, which leads to the frequently unwanted heating of the coated articles on exposure to sunlight, for example.

Metal platelets have the disadvantage that they are susceptible to corrosion and are non-transparent.

The inorganic oxides or mixed oxides employed to date, in the form of platelets with mica, for example, as carrier material, or in a form in which the dimensions in the three spatial directions are approximately equal, such as antimony-doped tin oxide without a carrier, require, as a result of their geometric form, relatively high use concentrations in order to exhibit a distinct effect.

The application of an additional layer to the pigment, however, implies a considerable additional expense in production and makes the product more expensive. In addition, the pigment has conductivity values which do not satisfy the high requirements.

In order to improve the conductivity of polymeric systems, such as plastics, paints or printing inks, for example, it is known from DE-A 42 12 950 to employ a pigment consisting of a component A, which consists of one or more conductive, platelet-shaped pigments, and a component B, which comprises one or more conductive, non-platelet-shaped pigments.

It has now surprisingly been found that a pigment mixture comprising coated Al₂O₃ flakes in combination with electrically conductive pigments has similar conductive properties as the conductive pigments alone together with a very attractive colouristic depth and glitter effect. Pigment mixtures of Al₂O₃ flake pigments with other functional pigments as magnetic or IR-reflective pigments lead to very effective combinations of colouristic and functional effects, too.

The invention hence provides a pigment mixture consisting of at least two components, component A being Al₂O₃ flakes coated with one or more metals, metal oxides and/or metal sulfides and component B being one or more functional pigments as such as electrically conductive pigments, lasermarkable pigments, magnetic pigments or IR-reflective pigments, and provides for their use in varnishes, paints, printing inks, plastics and powder coatings.

The invention likewise provides the formulations, such as paints, varnishes, powder coating materials, printing inks, plastics and agricultural films, which comprise the pigment mixture of the invention.

The coated Al₂O₃ flakes can be mixed in any proportion with the functional pigments. The preferred ratio of component A to component B is from 1:10 to 10:1, in particular from 1:2 to 2:1.

Aluminum oxide in a flaky form is commercial available for example from Merck KGaA under the tradename Xirallic®. α-Al₂O₃ in the form of hexagonal flakes having a particle diameter greater than 10 µm and an aspect ratio (particle diameter/ thickness) of 5-10 is known from JP 111239/1982 (Laid open No.).

The Japanese Patent Publication No. 72527/1991 discloses α-Al₂O₃ in the form of flakes having an average particle diameter of 0,5-3 µm.

The JP 39362/1992 (Laid open No.) describes Al₂O₃ in the form of fine platy particles of a hexagonal crystal system with the plane perpendicular to the C axis grown into a plate.

Preferred Al₂O₃ flakes are flakes composed of aluminum oxide (as a major constituent) and of titanium dioxide (as a minor constituent) which are known from U.S. 5,702,519. These Al₂O₃ flakes are prepared from a uniform aqueous solution of water-soluble aluminum salt and titanium salt by hydrolysis with an alkali carbonate aqueous solution containing an alkali metal salt like alkali metal sulfate and phosphoric acid or phosphate, drying by evaporation (dehydration by heating), and molten-salt treatment.

The Al₂O₃ flakes are coated with one or more metal oxide layers. Examples of suitable metal oxides or metal oxide mixtures are titanium dioxide, zirconium oxide, zinc oxide, iron oxide (Fe₂O₃ and/or Fe₃O₄) and/or chromium oxide, especially TiO₂ and/or Fe₂O₃ as described in U.S. 5,702,519. Coating of the Al₂O₃ flakes with one ore more metal oxides may be accomplished by any known method such as hydrolysis of a metal salt by heating or alkali, which deposits hydrated metal oxide, followed by calcination.

Al₂O₃ flakes can also by coated with one or more layers of a metal or metal alloy selected from chromium, nickel, silver, bismuth, copper, tin or hastalloy.

Al₂O₃ flakes coated with a metal sulfide are coated with sulfides e.g. of tungsten, cerium, molybdenum, lanthanum or care earth elements.

The Al₂O₃ flakes can be coated by wet chemical coating, by CVD or PVD processes.

The effect of component B shall be demonstrated using the example of conductive pigments. By the conductive pigments of component B are understood all pigments known to the skilled worker and comprising platelet-shaped, acicular or fibre-like carrier materials, such as mica, glass flakes, SiO₂ flakes, ceramic platelets, glass fibres, alumina fibres or titanium dioxide fibres that are coated with a conductive layer. It is also possible to use a carrier-free conductive pigment.

Also suitable in principle are carbon fibres, although in this case no additional conductive coatings are necessary since the fibres already possess sufficient conductivity. By acicular, fibre-like particles are meant those having a length-to-diameter ratio of more than 5. Suitable platelet-shaped pigments are known, for example, from EP 0 373 575.

The invention additionally provides paints, printing inks, plastics or powder coating materials that are pigmented with the pigment mixture of the invention. The proportion of the pigment mixture therein is from 1 to 80 % by weight, preferably more than 2 % by weight, based on the overall solid content of the system in which it is employed.

As a conductive layer on a carrier, particular suitability is possessed by aluminum-doped zinc oxide and by antimony-, halogen- and/or phosphorus-doped tin oxide or titanium dioxide.

The conductive layer is applied in a conventional manner in accordance, for example, with the process described in EP-A 0 139 557. In this process it is possible to employ all customary conductive metal oxides and/or metal oxide mixtures. A selection of such materials is given in EP-A 0 139 557 on page 5, lines 5-19. Preference, however, is given to the application of a conductive layer of antimony-doped tin oxide which is applied in an amount of 25-100 % by weight, in particular in an amount of 50-75 % by weight, based on the platelet-shaped substrate.

In the case of the use of an aluminum-doped zinc-oxide layer the proportion of the conductive layer is preferably from 40 to 200 % by weight based on the carrier material, with proportions of from 100 to 200 % by weight being employed with preference.

If the conductive layer consists of tin(lV) oxide or titanium dioxide doped with at least one halide, preferably fluoride, then the proportion of the conductive layer is from 20 to 200 % by weight, preferably from 60 to 150 % by weight, based on the carrier material. Pigments of this kind are known, for example, from DE-A 42 43 163. In the case of the conductive layer comprising phosphorus-doped tin oxide the proportion of the conductive layer is 25-100 % by weight based on the substrate, especially 50-75 % by weight. Pigments of this kind are known, for example, from DE-A 44 35 301. Larger quantities, although possible, do not bring about any further increase in the conductivity, and the pigments become increasingly darker.

In the case that the conductive pigment contains an antimony doped-tin dioxide layer the tin/antimony ratio is preferably from 2:1 to 20:1, in particular from 5:1 to 10:1. If the content of antimony is too low it is impossible to achieve high conductivity's, whereas with a higher antimony content the pigments become increasingly darker.

Conductive, platelet-shaped pigments which can be assigned to component B of the pigment mixture of the invention are obtainable commercially under the tradename Minatec® (Merck KGaA, Darmstadt), and Zelec® ECP (DuPont). A product marketed under the tradename Minatec® CM 31 consists of mica flakes coated with antimony-doped tin dioxide. Under the tradename Minatec® CM 30 a conductive pigment is marketed which consists of titanium dioxide-coated mica and which possesses as a conductive layer an antimony-doped tin dioxide layer.

The combination of Al₂O₃ flake pigments with conductive, platelet-shaped and/or acicular particles leads to conductive products whose electrical properties are similar as those of a conductive pigment alone. The advantages become particularly distinct in the system in which the pigments are used, especially in the case of their incorporation into plastics. The use concentrations required for the pigment mixture of the invention in the plastic (pigment volume concentration) are similar as in the case of conventional conductive pigments. This is advantageous because of the very interesting colouristic effects which can be simultaneously achieved by using the mixture of the conductive pigments together with the Al₂O₃ pigments. The use specifically of fibre-like conductive pigments frequently also leads to an additional stabilisation of the mechanical properties of the plastic.

Comparable advantageous effects can be achieved by the combination of interesting colouristics of Al₂O₃ flake pigments with the physical properties of functional pigments such as magnetic or IR-reflective pigments.

The pigment mixture of the invention is simple and easy to handle. The pigment mixture can be incorporated into the system in which it is used by simple stirring. Laborious milling and dispersing of the pigments is unnecessary.

The pigment mixture of the invention can be used for pigmenting coating materials, printing inks, plastics, agricultural films, for coating seed or for colouring foods. The concentration of the pigment mixture in the system in which it is used for pigmenting is in general between 0.01 and 50 % by weight, preferably between 0.1 and 10 % by weight, based on the overall solids content of the system. This concentration is generally dependent on the specific application.

Plastics comprising metal oxide coated Al₂O₃ flakes in combination with conductive pigments in amounts of 0.1 to 50 % by weight, in particular from 0.5 to 7 % by weight, are frequently notable for a particular sparkle effect.

Plastics which comprise the pigment mixture of the invention in amounts of from 0.1 to 10 % by weight are, moreover, highly suited to laser marking. The marking operations carried out, for example, with a CO₂ or Nd-YAG laser, lead to sharply defined, abrasion-resistant markings.

In the coatings sector the pigment mixture is employed in amounts of 5-35 % by weight. The proportion in which the coated Al₂O₃ flakes are mixed with component B depends on the desired effect. The Al₂O₃ flakes are preferably employed with component B in a ratio of 1:5, especially 1:3. In the coating material the pigment mixture of the invention has the advantage that the desired colour flop effect is obtained by a single-coat finish. This colour flop is extremely pronounced. In comparison with coatings which comprise an interference pigment based on mica rather than the coated Al₂O₃ flakes, coatings with the pigment mixture of the invention exhibit a marked depth effect and a glitter effect.

In the pigmentation of binder systems, for example for paints and printing inks for intaglio, offset or screen printing, pigment mixtures consisting in particular of coated Al₂O₃ flakes with Minatec® (Merck KGaA, Darmstadt) have been found particularly suitable. The pigment mixture is incorporated into the printing ink in amounts of 2-35 % by weight, preferably 5-25 % by weight and, in particular, 8-20 % by weight. The mixing ratio of component A to component B is preferably in the range from 1:5 to 5:1. The printing inks comprising the pigment mixture of the invention exhibit purer hues and are of improved printability owing to the good viscosity values.

The invention hence also provides formulations containing the pigment mixture of the invention.

The examples which follow are intended to illustrate the invention without, however, limiting it.

### Examples

### Example 1

### Intaglio printing ink

consisting of:

| | |
|---|---|
| 70 g | nitrocellulose-based binder from Gebrüder Schmidt, 95MB011, with a solids content of 20% |
| 15 g | Minatec® 31 CM (conductive pigment from Merck KGaA, Darmstadt, FRG) |
| 15 g | TiO₂ coated Al₂O₃ flakes with a particle size of 5 to 60 µm |
| 30 g | 1-ethoxy-2-propanol |

### Example 2

### Plastic

1 kg of polyethylene (PE-HD) granules are uniformly wetted in a tumble mixer with 2 g of adhesion agent. Then 10 g of TiO₂ coated Al₂O₃ flakes of particle size 5-60 µm and 2 g of Iriodin® LS 825 (conductive pigment from Merck KGaA, Darmstadt, FRG) with a particle size < 15 µm are added and the components are mixed for 2 minutes.

These granules are processed under conventional conditions on an injection moulding machine to give small stepped plates measuring 4 × 3 × 0.5 cm. The small stepped plates are notable for their lustre and their laser markability.

### Example 3

### Coating material

| | |
|---|---|
| 30 g | TiO₂ coated Al₂O₃ flakes of particle size 5-60 µm (Merck KGaA) |
| 10 g | Minatec® 40 CM (conductive pigment from Merck KGaA) |
| 42 g | paint base (AU-MF system, solids = 19%) |
| 18 g | diluent mixture |

The coating features antistatic properties and a colour flop from pale lilac to pale green.

## Claims

1. Pigment mixture containing at least two components, component A being Al₂O₃ flakes coated with one or more metals, metal oxides and/or metal sulfides and component B being one or more functional pigments.

2. Pigment mixture according to Claim 1, **characterised in that** component A comprises Al₂O₃ flakes coated with TiO₂ and/or Fe₂O₃.

3. Pigment mixture according to Claim 1 or 2, **characterised in that** component B comprises electrically conductive pigments, magnetic pigments, IR-reflective pigments and/or lasermarkable pigments.

4. Pigment mixture according to one of Claims 1 to 3, **characterised in that** component B comprises SiO₂ flakes or mica platelets coated with one or more metal oxides and having as a conductive layer an antimony-, halogen- and/or phosphorus-doped tin dioxide layer.

5. Pigment mixture according to one of Claims 1 to 4, **characterised in that** component A and component B are mixed in a ratio of from 10:1 to 1:10.

6. Use of the pigment mixture according to Claim 1 in paints, varnishes, printing inks, plastics, for colouring seed and for laser marking.

7. Formulations containing a pigment mixture according to Claim 1.

## Patentansprüche

1. Pigmentgemisch enthaltend mindestens zwei Komponenten, wobei Komponente A mit einem oder mehreren Metallen, Metalloxiden und/oder Metallsulfiden beschichtete Al₂O₃-Schuppen und Komponente B ein oder mehrere funktionelle Pigmente sind.

2. Pigmentgemisch nach Anspruch 1, **dadurch gekennzeichnet, dass** Komponente A mit TiO₂ und/oder Fe₂O₃ beschichtete Al₂O₃-Schuppen enthält.

3. Pigmentgemisch nach Anspruch 1 oder 2, **dadurch gekennzeichnet, dass** Komponente B elektrisch leitende Pigmente, Magnetpigmente, IR-reflektierende Pigmente und/oder lasermarkierbare Pigmente enthält.

4. Pigmentgemisch nach einem der Ansprüche 1 bis 3, **dadurch gekennzeichnet, dass** Komponente B SiO₂-Schuppen oder Glimmerplättchen enthält, die mit einem oder mehreren Metalloxiden beschichtet sind und als leitende Schicht eine antimon-, halogen- und/oder phosphordotierte Zinndioxidschicht tragen.

5. Pigmentgemisch nach einem der Ansprüche 1 bis 4, **dadurch gekennzeichnet, dass** Komponente A und Komponente B im Verhältnis von 10:1 bis 1:10 gemischt sind.

6. Verwendung des Pigmentgemisches nach Anspruch 1 in Farben, Lacken, Druckfarben, Kunststoffen, zur Saatguteinfärbung und zur Lasermarkierung.

7. Formulierungen enthaltend ein Pigmentgemisch nach Anspruch 1.

## Revendications

1. Mélange de pigments contenant au moins deux composants, le composant A étant des flocons de Al₂O₃ enduits avec un ou plusieurs métaux, oxydes métalliques et/ou sulfures métalliques et le composant B étant un ou plusieurs pigments fonctionnels.

2. Mélange de pigments selon la revendication 1, **caractérisé en ce que** le composant A comprend des flocons de Al₂O₃ enduits avec du TiO₂ et/ou du Fe₂O₃.

3. Mélange de pigments selon l'une quelconque des revendications 1 ou 2, **caractérisé en ce que** le composant B comprend des pigments électriquement conducteurs, des pigments magnétiques, des pigments réflecteurs d'IR et/ou des pigments pouvant être marqués au laser.

4. Mélange de pigments selon l'une quelconque des revendications 1 à 3, **caractérisé en ce que** le composant B comprend des flocons de SiO₂ ou des plaquettes de mica enduites avec un ou plusieurs oxydes métalliques et ayant comme couche conductrice une couche de dioxyde d'étain dopé à l'antimoine, à l'halogène et/ou au phosphore.

5. Mélange de pigments selon l'une quelconque des revendications 1 à 4, **caractérisé en ce que** le composant A et le composant B sont mélangés dans un rapport de 10:1 à 1:10.

6. Utilisation du mélange de pigments selon la revendication 1 dans les peintures, vernis, encres d'impression, plastiques, pour colorer les semences et pour le marquage au laser.

7. Formulations contenant un mélange de pigments selon la revendication 1.
